# EUROPÄISCHE PATENTSCHRIFT

(11) **EP 2 362 244 B1**
(45) Veröffentlichungstag und Bekanntmachung des Hinweises auf die Patenterteilung: **06.10.2021**
(21) Anmeldenummer: 11001572.4
(22) Anmeldetag: 25.02.2011
(51) Int. Cl.: G01V 8/20, G08B 13/183

(54) **Verfahren zur Überwachung eines Raumes**
Room surveillance method
Procédé de surveillance d'un espace

(30) Priorität: 26.02.2010 DE 102010009590
(43) Veröffentlichungstag der Anmeldung: 31.08.2011
(73) Patentinhaber: Rheinisch-Westfälische Technische Hochschule Aachen, 52062 Aachen (DE)
(72) Erfinder: Moellering, Christian, 52249 Eschweiler (DE); Kasugai, Kai, 52064 Aachen (DE); Russell, Peter John, 4851 Plombiere (BE); Stachelhaus, Thomas, 6462 HX Kerkrade (NL)
(74) Vertreter: Cohausz Hannig Borkowski Wißgott

(56) Entgegenhaltungen:
- EP-A2- 1 260 950
- EP-A2- 1 813 967
- WO-A1-94/08258
- WO-A1-2008/138598
- DE-U1- 29 707 158
- US-A1- 2001 025 918
- US-A1- 2008 157 965

## Beschreibung

Die vorliegende Erfindung betrifft ein Verfahren zur Überwachung eines zumindest teilweise geschlossenen Raumes gemäß Anspruch 1.

Anordnungen mit Sensoren zur Überwachung eines Raumes sind bekannt. Sie dienen der Bestimmung eines Aufenthaltsortes einer Person innerhalb des Raumes und als Grundlage für die Automatisierung der Umgebung. So kann beispielsweise automatisiert beim Betreten eines Raumes das Licht, die Heizung, Musik oder können auch andere technische Geräte, wie beispielsweise ein Bildschirm eingeschaltet und bei Verlassen des Raumes ausgeschaltet werden. Das Technologiefeld derartiger Personenhilfssysteme wird mit dem Begriff "ambient intelligence", d.h. intelligente Umgebung bezeichnet. Insbesondere für ältere und/oder kranke Menschen können derartige Personenhilfssysteme im Alltag das Leben erleichtern. So kann sich beispielsweise eine Schublade mit zu nehmenden Medikamenten selbstständig öffnen, sobald sich eine Person der Schublade nähert bzw. vor ihr steht. Im Mittelpunkt derartiger Raumüberwachungssysteme steht darüber hinaus die Erkennung einer Notsituation. Hierbei wird insbesondere anhand von Sensorinformationen über die Situation im Raum auf die Aufenthaltsart geschlossen, d.h. ob sich eine Person im Raum stehend oder liegend befindet. Im letzteren Falle kann darauf geschlossen werden, dass eine Person gestürzt ist und dringend Hilfe braucht. In diesem Fall kann unmittelbar ein automatischer Notruf an eine Notrufzentrale abgesetzt werden. Ferner kann auch aus der Tatsache, dass für einen längeren Zeitraum entgegen einer Normalsituation keine Bewegung innerhalb eines Raumes erkannt worden ist, auf eine Notsituation geschlossen werden. Dies ermöglicht die schnellstmögliche uhd häufig lebensrettende Einleitung von Hilfsmaßnahmen.

Es sind verschiedene Konzepte zur Überwachung von Räumen bekannt. Beispielsweise werden Bewegungsmelder eingesetzt, um festzustellen, ob sich eine Person innerhalb eines bestimmten Raumbereichs bewegt oder nicht, der von dem oder den Bewegungsmeldern erfasst wird. Bewegungsmelder sind eine sehr einfache und im Einzelfall preiswerte Überwachungsmethode. Sie liefern jedoch nur binäre Zustände, können keine exakte Position einer Person und auch keine Informationen über den Raum und seine Gegenstände an sich bereitstellen. Ein aus Bewegungsmeldern aufgebautes Überwachungssystem muss manuell mit raumgeometrischen Informationen gefüttert werden, um aussagekräftige und auswertbare Informationen zu erhalten. Dies ist zeitaufwendig und führt letztendlich nur zu begrenzten Informationen.

Zur konkreten Lokalisierung einer Person im Raum können unterschiedliche Sender/Empfänger-Anordnungen verwendet werden, die jedoch gemäß Stand der Technik stets vorsehen, dass die Person einen Sender und/oder einen Empfänger am Körper trägt. Bekannt ist hierbei eine Lokalisierung über Infrarot, wobei im Raum Infrarotsender angeordnet sind und die zu lokalisierende Zielperson einen Infrarotempfänger trägt. Auch sind Lokalisierungsmethoden mittels RFID (Radio Frequency Identification) bekannt, bei denen die Person jedoch einen RFID-Chip am Körper tragen muss. Sofern die im Raum zu lokalisierende Person den Sender oder Empfänger nicht im Körper implantiert hat, besteht die große Gefahr, dass die Person vergisst, den Sender oder Empfänger zu tragen, so dass das Überwachungssystem nicht wirksam arbeiten kann. Darüber hinaus ist jedoch festzustellen, dass sich Personen, die einen Sender oder Empfänger tragen, krank fühlen, so dass die genannten Verfahren einem guten Befinden der Person abträglich sind.

Eine weitere Überwachungsmethode ist die Lokalisierung einer Person mittels berührungsempfindlichem Boden, bei dem im Boden eingesetzte Druck- und/oder Näherungssensoren den Standort der Person sowie liegende Personen erkannt werden können. Der Einbau derartiger Böden gestaltet sich jedoch aufwendig und schwierig, da der Fußbodenaufbau erneuert und teilweise um mehrer Zentimeter erhöht werden muss. Ein derartiges Überwachungssystem ist daher bezüglich des zu überwachenden Raumes äußerst invasiv, was den Eingriff in die Gebäude- bzw. Raumsubstanz anbelangt.

Eine weitere Überwachungsmöglichkeit besteht darin, Kameras zu verwenden. Hierbei kann eine Person sowie deren Tätigkeit mittelbar und eindeutig filmszenisch erfasst werden. Nachteilig ist hierbei, dass die Privatsphäre der sich in den überwachten Räumlichkeiten bewegenden Person verletzt wird, rechtliche Datenschutzprobleme vorliegen, und eine Kameraüberwachung im Übrigen der oder den überwachten Personen das Gefühl gibt, stets beobachtet zu werden, was wiederum zu Unbehagen führt. Darüber hinaus ist eine Kameraüberwachung bezüglich Aufbau und Betrieb, insbesondere unter Berücksichtigung der notwendigen Bildauswertung, technisch vergleichsweise aufwendig und rechenintensiv.

Sämtliche der genannten Überwachungsmethoden nach dem Stand der Technik sind mit Nachteilen verbunden, da sie kein impliziertes Wissen über die geometrische Struktur des Raumes verwenden, in der sie integriert sind, teilweise voraussetzen, dass eine zu lokalisierende Person einen Sender oder Empfänger am Körper trägt, oder nur mit erheblichem Zeit und technischem Aufwand in die zu überwachenden Räumlichkeiten integriert werden können.

Ein Sensorsystem der in der Einleitung genannten Gattung ist aus der europäischen Patentanmeldung EP 1 813 967 A1 bekannt. Sie beschreibt die Verwendung eines Lichtgitters zur Objekterkennung und Felderfassung aus einzelnen Modulen, die optoelektronische Lichtsender und/ oder Lichtempfänger enthalten. Die Module werden galvanisch getrennt miteinander zu einer Reihe gekoppelt. Sie besitzen jeweils ein leistenförmiges Gehäuse an deren Enden jeweils ein Teil der galvanischen Trenneinrichtung angeordnet, wobei im zusammengefügten Zustand, die Trenneinrichtung vervollständig ist. Die Trenneinrichtung kann beispielsweise durch eine induktive Kopplung, d.h. mittels elektromagnetischem Übertrager, oder durch eine optische Kopplung, beispielsweise mittels Optokoppler erfolgen. Wie die einzelnen Sender und Empfänger eine Objekterkennung durchführen, beschreibt die EP 1 813 967 A1 nicht.

Die internationale Anmeldung WO 2008/138598 A1 beschreibt einen optoelektronischen Sensor zum Absichern eines Gefahrenbereichs, beispielsweise vor einem Roboter, bei dem sich zwei reihenförmige Sensorteile aus Modulen mit Sende- und Empfangselementen derart gegenüberliegen, dass ein Sendeelement des einen Sensorteils genau einem Empfangselement des anderen Sensorteils gegenüberliegt. Die Sendeelemente senden modulierte, senderspezifische Sendestrahlen aus, wobei ein jeweils gegenüberliegendes Empfangselement nur auf die Sendestrahlen des jeweils gegenüberliegenden Senders reagiert. Wird irgendein Sendesignal nicht empfangen, erfolgt die Abschaltung des Roboters. Die Bestimmung des Aufenthaltsbereichs oder der Aufenthaltsart einer Person im Raum kann damit nicht erfolgen.

Es ist Aufgabe der vorliegenden Erfindung, ein Verfahren zur Überwachung eines zumindest teilweise geschlossenen Raumes zur Bestimmung des Aufenthaltsbereichs wenigstens einer Person in dem Raum und ob sich eine Person im Raum stehend oder liegend befindet, mittels eines Sensorsystems aus Sendern und Empfängern, die eine bandförmige Reihe bilden, bereitzustellen, das den Aufenthaltsort und die Aufenthaltsart der Person auf einfache Weise zuverlässig und mit hoher Genauigkeit feststellen kann.

Diese Aufgabe wird durch ein Verfahren nach Anspruch 1 gelöst. Vorteilhafte Weiterbildungen sind in den jeweiligen Unteransprüchen formuliert. Das erfindungsgemäße Verfahren verwendet ein Sensorsystem zur Überwachung eines zumindest teilweise geschlossenen Raumes, mit einer Vielzahl von Sendern zur Aussendung von Detektionssignalen, insbesondere optischer Detektionssignale, und Empfängern zum Empfang dieser Detektionssignalen, die in dem Raum angeordnet und über einen Bus miteinander und mit einer Steuer- und Auswerteeinheit verbunden sind, wobei die Sender und Empfänger eine bandförmige Reihe bilden und wenigstens ein Sensor und/ oder wenigstens ein Empfänger auf oder in einem leistenförmigen Trägerelement angeordnet sind, und die Reihe eine über dem Boden des Raumes liegende Überwachungsfläche zumindest teilweise begrenzend einschließt, und wobei die Sender und Empfänger entlang der Reihe derart angeordnet sind, dass das Detektionssignal eines Senders von mindestens einem der Empfänger empfangbar ist.

Ein derartiges Sensorsystem mit einer Anordnung von Sendern und Empfängern in wenigstens einer bandförmigen Reihe bietet eine flexible Möglichkeit, eine Überwachungsfläche auszubilden, um einen Teilbereich eines Raumes oder einen ganzen Raum, der geschlossen oder zu einer Seite hin geöffnet ist, vollständig zu überwachen. Dabei liegt der Grundgedanke der vorliegenden Erfindung darin, Sender und Empfänger beabstandet zueinander in einer Reihe, insbesondere äquidistant, beispielsweise in einem Abstand von 30cm, derart anzuordnen, so dass ein von einem Sender ausgesendetes Detektionssignal von einem oder mehreren Empfängern detektiert werden kann bzw. können.

Dabei können die Sender und Empfänger auf gegenüberliegenden Raumseiten angeordnet sein, so dass sich einige Sender und einige Empfänger in Strahlrichtung gegenüberliegen. Zusätzlich oder alternativ können auch Spiegel vorgesehen sein, die den Sendern in Strahlrichtung gegenüberliegenden und an denen die Detektionssignale reflektierbar sind, wobei das reflektierte Detektionssignal von mindestens einem der Empfänger empfangbar ist. Dabei kann auf einer Raumseite die Reihe aus Sendern und Empfängern und auf der anderen, gegenüberliegenden Raumseite, eine Reihe aus Spiegeln angeordnet sein. Alternativ kann die Reihe aus Sendern und Empfängern an beiden Raumseiten angeordnet sein und Spiegel zwischen den Sendern und Empfängern liegen. In einer weiteren Ausführungsvariante können Sender und Empfänger jeweils eine Reihe bilden, wobei die beiden Reihen in geringem Abstand zueinander im Wesentlichen parallel zueinander verlaufen.

Strahlengeometrisch kann zwischen jedem Sender und Empfänger oder Sender und Spiegel und Spiegel und Empfänger eine Strahlrichtung definiert werden, wobei die Gesamtheit aller Strahlrichtungen ein Netz bildet, dass die Überwachungsfläche definiert bzw. bildet. Zur Ausbildung dieser Überwachungsfläche kann die bandförmige Reihe aus Sendern und Empfängern winkelgemäß der geometrischen Struktur des Raumes entsprechen. Befindet sich eine Person im Strahlengang zwischen einem Sender und einem Empfänger wird das von diesem Sender ausgesendete Detektionssignal nicht von dem entsprechenden Empfänger detektiert, so dass aus der Nichtdetektion des Signals gegenüber der Normalsituation eines leeren Raumes eine erste Information über den Aufenthaltsort der Person erhalten werden kann, Wird dies für alle Empfänger durchgeführt, die im personenleeren Raumzustand (Normalfall) das Detektionssignal eines bestimmten Senders empfangen, kann aus der Überlagerung der unterbrochenen Strahlengänge der Aufenthaltsort der Person ermittelt werden.

Vorzugsweise ist die Reihe von und bis zu einem Winkel gerade ausgeführt, so dass die von der Reihe zumindest teilweise begrenzend eingeschlossene Überwachungsfläche eine ebene Fläche darstellt. Dies gewährleistet eine einfache strahlengeometrische Erfassung der Aufenthaltsposition einer Person im Raum.

Die Sender und Empfänger können in Bezug zu dem Boden des Raumes auf gleicher Höhe, insbesondere in Bodennähe angeordnet werden. Damit wird erreicht, dass die Überwachungsfläche parallel zu dem Boden des Raumes liegt. Dies gewährleistet, dass die ebene Überwachungsfläche effektiv und vollständig benutzt wird. Befindet sich in dem zu überwachenden Raum eine Treppe, auf der sich eine Person ebenfalls aufhalten kann und die aus diesem Grunde ebenfalls zu überwachen gewünscht ist, kann sich die ebene Überwachungsfläche, zumindest in diesem Treppenbereich des Raumes, parallel zu einer Ebene erstrecken, in der die Vorderkanten der Stufen liegen. In entsprechender Weise kann bei Vorhandensein einer Rampe in dem zu überwachenden Raum sich die ebene Überwachungsfläche parallel zu der Rampe erstrecken.

Weiterhin vorteilhaft ist es, die Reihe aus Sendern und Empfängern und damit die . dadurch definierte Überwachungsfläche in Bodennähe anzuordnen. Unter einer bodennahen Anordnung ist dabei eine solche Positionierung der Sender und Empfänger zum Boden des Raumes zu verstehen, die zumindest unterhalb der halben Raumhöhe insbesondere zwischen 1cm und 30cm über der Bodenoberfläche liegt. Eine derartige Anordnung hat den Vorteil, dass auch im Raum liegende Personen erkannt werden können, da sie in diesem Fall inmitten der Überwachungsfläche liegen würde. Zusätzlich kann eine weitere Reihe mit Sendern und Empfängern vorgesehen sein, die eine zweite Überwachungsfläche parallel zu dem Boden des Raumes definiert, und die in Bezug zu der ersten bodennahen Überwachungsfläche höher angeordnet ist, beispielsweise in einer Höhe von 1,50 m. Auf diese Weise ist es möglich, im Raum befindliche Menschen und Haustiere zu unterscheiden.

Um den zu überwachenden Raum in seiner Gesamtheit zu erfassen, sind die Sender und Empfänger auf oder in Trägerelementen angeordnet, die auf die Innenwände des Raumes aufgebracht werden. Die Anordnung auf den Wänden hat den Vorteil, dass das Sensorsystem auf einfache Weise in dem Raum nachgerüstet werden kann.

Die Sender und Empfänger sind an einen Bus angeschlossen, der eine Kommunikation von diesen zu der zentralen Steuer- und Auswerteeinheit sowie von dieser zentralen Steuer- und Auswerteeinheit zu den Sendern und Empfängern ermöglicht. Darüber hinaus können die Sender und Empfänger zusätzlich über den Bus mit Energie versorgt werden. Über den Bus sind alle Sender und Empfänger elektrisch miteinander verbunden. Der Bus kann ein beliebiger Kommunikationsweg sein, der die Kommunikation der Teilnehmer des Busses, d.h. der Sender und Empfänger einerseits und der Steuer- und Auswerteeinheit andererseits, durch Adressierung bereitstellt. Beispielsweise kann der Bus als CAN-Bus (Controller Area Network), EIB-Bus (European Installation Bus), Ethernet mit TCP/IP basierter Datenübertragung oder auch beliebig anders ausgebildet sein.

Jeweils wenigstens ein Sensor und wenigstens ein Empfänger können eine Gruppe oder konstruktive Einheit bilden und gemeinsam auf oder in einem leistenförmigen Trägerelement angeordnet sein, wobei mehrere Trägerelemente zur Bildung der bandförmigen Reihe modulartig miteinander verbunden werden bzw. sein können. Durch ebendiese Verbindung dieser leistenförmigen Trägerelemente wird die die Überwachungsfläche definierende Reihe gebildet. Dabei ist unter einem leistenförmigen Trägerelement ein solches Element zu verstehen, dass eine erheblich größere Länge als Breite und Tiefe aufweist, wobei zur Ausbildung der Reihe die Stirnseiten zweier Trägerelemente zueinander gerichtet sind. Zur Bildung der Reihe sind die Trägerelemente zumindest elektrisch miteinander verbunden, welches zumindest die Buskommunikation ermöglicht und bereitstellt.

Beispielsweise können zwei Trägerelemente mit ihren Stirnseiten mechanisch miteinander verbunden werden bzw. im Sensorsystem miteinander verbunden sein, so dass eine geschlossene Reihe von Trägerelementen entsteht, Dies ist optisch besonders ansprechend gegenüber der beabstandeten Anordnung von Trägerelementen, die beispielsweise über ein Kabel miteinander verbunden sind. Die stirnseitige Verbindung der Trägerelemente miteinander kann bei einzelnen oder allen Trägerelementen der Reihe vorgesehen sein. Zumindest können auf diese Weise alle auf derselben Wand des Raumes liegenden Trägerelemente miteinander verbunden sein, wobei das letzte Trägerelement einer derartigen Reihe beispielsweise über ein Kabel mit dem nächsten Trägerelement einer Reihe auf der benachbarten Wand verbunden ist. Auf diese Weise können Trägerelemente, die eine Innenecke oder Außenecke bilden, vermieden werden.

Soll die bandförmige Reihe aus den einzelnen Trägerelementen einstückig entlang der Wände des Raumes verlegt werden, so können verschiedene Arten von Trägerelementen zur Ausbildung des Sensorsystems verwendet werden. Dabei sind insbesondere gerade Trägerelemente konstanter Länge, gerade Trägerelemente veränderlicher Länge, und Trägerelemente, die eine Innenecke oder Außenecke bilden oder entsprechende Ausformung der stirnseitigen mechanischen Schnittstelle bilden können, zu unterscheiden. Mit einem derartigen Satz von Trägerelementen können alle rechtwinkligen Räume mit einem Sensorsystem ausgestattet werden. Für Räume mit gebogenen Wänden, Auf- und Abgängen oder Stufen können spezielle gerade, winklige und/ oder gebogene Trägerelemente fester oder variabler Länge vorgesehen werden. Auch können reine Überbrückungselemente vorgesehen werden, die keinen Sender oder Empfänger tragen, sondern vielmehr den Bus von einem Trägerelement zum nächsten Trägerelement durchschleifen.

Vorzugsweise beträgt die Länge eines geraden Trägerelementes konstanter Länge zwischen 30cm und 100cm. Dabei kann ein Trägerelement umso mehr Sender und Empfänger tragen, je länger es ausgebildet ist. Es ist selbstverständlich, dass eine Montage der Trägerelemente in dem Raum umso schneller durchgeführt werden kann, je länger die Trägerelemente sind. In Abhängigkeit der geometrischen Struktur des Raumes kann es jedoch erforderlich sein, Trägerelemente unterschiedlicher Länge zu verwenden. So können beispielsweise Trägerelemente mit einer Länge von 30cm, 40cm, 50cm, 60cm, 80cm oder 100cm, oder auch mit zwischen den genannten Werten liegenden Längen zum Aufbau der bandförmigen Reihe bereitgestellt werden. Im Falle von Innenecken oder Außenecken bildenden Trägerelementen können diese jeweils Schenkellängen zwischen 10cm und 50cm aufweisen. Da die Wandlänge eines Raumes selten ein vielfaches der kleinsten Leistenlänge eines Trägerelementes sein dürfte, ist die Bereitstellung eines weiteren, insbesondere geraden Trägerelementes variabler Länge notwendig, das eine Anpassung der Länge der Reihe von Trägerelementen an die Wandlänge zur Ausbildung einer raumlangen Reihe ermöglicht. Ein solches variables Trägerelement kann beispielsweise eine einstellbare Länge zwischen 20cm und 50cm aufweisen.

Die Trägerelemente können Fußleisten oder Teile davon bilden. Dies ermöglicht eine unauffällige Integration des Sensorsystems in dem Raum, da Fußleisten in der Regel stets vorhanden sind und damit keine Änderung der Raumgestaltung vorliegt. Die Unauffälligkeit ist damit zum einen ästhetischer Art, da sich das Sensorsystem in das Raumdesign einfügt, und psychologischer Art, da eine Person den Fußleisten mit ihren Sendern und Empfängern aufgrund ihrer bodennahen Anordnung wenig Beachtung schenken wird.

Weiterhin ist es von Vorteil, dass die Reihe einen geschlossenen Ring bildet. Der geschlossene Ring ermöglicht, dass auch die Buskommunikation gemäß einer Ringtopologie, beispielsweise wie in einem Token-Ring erfolgen kann. Weiterhin gewährleistet die Anordnung der Sender und Empfänger in einem geschlossenen Ring die vollständige und lückenlose Überwachung der durch den Ring begrenzten Überwachungsfläche, wobei innerhalb der Fläche der Aufenthaltsort wenigstens einer Person eindeutig und präzise bestimmt werden kann. Schließlich ist die ringförmige Anordnung weiterhin deshalb vorteilhaft, weil hierdurch ein automatisches Erkennen der Raumgeometrie möglich ist, wie nachfolgend noch erläutert wird.

Es ist weiterhin von Vorteil, innerhalb der Reihe abwechselnd einen Sender und einen Empfänger anzuordnen. Dabei kann der Abstand zwischen einem Sender und einem unmittelbar benachbarten Empfänger zwischen 0,05 m und 0,5 m, insbesondere 0,2 m bis 0,4 m, vorzugsweise 0,3 m betragen. Hierdurch wird ein gleichmäßiges und je nach gewünschter Detektionsgenauigkeit dichtes Netz von Strahlengängen gebildet, das eine zuverlässige Erfassung des Aufenthaltsortes wenigstens einer sich im Raum befindenden Person und/ oder eines Gegenstandes gewährleistet. Vorzugsweise sind die Sender und Empfänger zueinander jeweils weitestgehend äquidistant angeordnet, damit in jedem Bereich des Überwachungsfeldes eine homogene Detektionsgenauigkeit vorliegt. Dabei kann jedoch in einzelnen Bereichen eine gegenüber anderen Bereichen höhere oder leicht geringere Detektionsgenauigkeit dadurch vorliegen, dass gerade Trägerelemente variabler Länge verwendet werden, bei denen auch entsprechend der Abstand zwischen Sender und Empfänger des längenvariablen Trägerelementes zueinander bzw. zu dem benachbarten Sender und benachbarten Empfänger größer oder kleiner als der Abstand der übrigen Sender und Empfänger sein kann.

In einer vorteilhaften Weiterbildung des Sensorsystems können die Trägerelemente wenigstens an einer Seite, insbesondere einer Stirnseite, eine mechanische und/oder elektrische Schnittstelle aufweisen, über die sie mit wenigstens einem anderen Trägerelement mechanisch und den Bus weiterführend miteinander verbunden sind. Hierdurch wird eine einfache und schnelle Montage des Sensorsystems im Raum gewährleistet. Die mechanische Schnittstelle kann durch konstruktive Verbindungsmittel, beispielsweise durch Steck-, Rast- oder Klemmverbindungen form- oder kraftschlüssig erfolgen. Zusätzlich zu der mechanischen Schnittstelle kann auch eine elektrische Schnittstelle vorgesehen sein, über die der Bus von einem Trägerelement zum nächsten Trägerelement weiter geführt wird, um deren jeweilige Sender und Empfänger mit dem Bus zu verbinden.

Grundsätzlich kann die elektrische Schnittstelle unabhängig von der mechanischen Schnittstelle ausgebildet und müsste nicht zwingend stirnseitig vorgesehen sein. So können die elektrischen Schnittstellen zweier benachbarter Trägerelemente über ein Kabel miteinander verbunden werden. Es ist jedoch von Vorteil, die elektrische Schnittstelle ebenfalls an die Stirnseite eines leistenförmigen Trägerelementes vorzusehen, so dass die elektrische Verbindung zwischen zwei benachbarten Trägerelementen gleichzeitig mit ihrer mechanischen Verbindung hergestellt wird. Die elektrische Schnittstelle kann hierfür durch eine Stecker-Buchse-Kombination ausgebildet sein, wobei die Stirnseite des einen Trägerelementes mit einem oder mehreren steckerförmigen elektrischen Kontakten und die Stirnseite des benachbarten, zu verbindenden Trägerelementes mit einem oder mehreren entsprechenden elektrischen Buchsenkontakten versehen ist. Weiterhin kann eine Stirnseite eines Trägerelementes auch sowohl einen Stecker als auch eine Buchse aufweisen, der bzw. die mit einer entsprechende Buchse respektive einen entsprechenden Stecker des benachbarten Trägerelementes form- oder kraftschlüssig in Verbindung bringbar sind. Vorzugsweise weisen beide Stirnseiten des leistenförmigen Trägerelementes eine mechanische und/oder elektrische Schnittstelle auf, so dass die Trägerelemente zur Ausbildung der Reihe aneinander reihbar sind. In einer weiteren Variante der Schnittstellen kann die mechanische Schnittstelle gleichzeitig auch zumindest einen elektrischen Kontakt aufweisen, der bei mechanischer Verbindung mit einem anderen Trägerelement mit einem elektrischen Kontakt der mechanischen Schnittstelle dieses Trägerelementes verbunden wird. Die mechanische und die elektrische Schnittstelle sind dabei als eine integrierte mechanisch-elektrische Schnittstelle ausgebildet.

Die Steuer- und Auswerteeinheit dient der Steuerung der Sender und der Auswertung von Detektionssignalen der Empfänger. Sie kann Teil eines der Trägerelemente des Sensorsystems sein, so dass sie ebenfalls unauffällig in dem Raum integriert ist. Die Sender und Empfänger sind dabei über den Bus mit der Steuer- und Auswerteeinheit verbunden, so dass die Ansteuerung der Sender und die Übertragung der Empfängersignale über den Bus erfolgt. Die zentrale Steuer- und Auswerteeinheit managt dabei den Bus insbesondere bezüglich der Adressierung der Daten. Die Kommunikation über den Bus kann über ein Internetprotokoll erfolgen.

In einer weiteren vorteilhaften Weiterbildung des Sensorsystems kann ein weiteres Trägerelement vorhanden sein, das einen Zugang zu dem Raum zumindest teilweise umschließt. Bei einem derartigen Zugang kann es sich beispielsweise um eine Öffnung in einer Wand handeln, die durch eine Tür verschlossen ist. Erstreckt sich diese Öffnung bis zum Boden des Raumes, ist die Wand bodenseitig, d.h. insbesondere im Bereich der Fußleisten entsprechend unterbrochen, so dass die Reihe der Sender und Empfänger respektive die mit den leistenförmigen Trägerelementen aufgebaute bandförmige Reihe im Bereich des Zugangs nicht geschlossen ist. Um diese Unterbrechung zu schließen, ist das weitere Trägerelement vorteilhafterweise als Türzarge ausgebildet, die die an den Zugang angrenzenden Trägerelemente des Raumes zu einer Reihe oder einem Ring miteinander verbinden kann.

Das weitere Trägerelement kann wenigstens einen Sensor zur Durchtrittserkennung aufweisen. Ein derartiger Sensor kann beispielsweise eine Lichtschranke aus einem Sender und einem diesem gegenüberliegenden Empfänger sein, die auf Bein-, Hüft- und/ oder Brusthöhe in den beiden vertikalen Türzargenelementen gegenüberliegend angeordnet sind. Die Lichtschranke kann dabei ebenfalls an den Bus angeschlossen sein und ein entsprechendes Detektionssignal an die zentrale Steuer- und Auswerteeinheit übertragen. Beispielsweise kann bei Erkennen eines Durchtritts das in dem Raum integrierte Sensorsystem aktiviert werden und bei Verlassen des Raumes deaktiviert werden. Um zu erkennen, in welche Richtung sich eine Person durch den Zugang zu dem Raum bewegt, können zwei Lichtschranken in Richtung des Zuganges des Raumes hintereinander liegend angeordnet sein. Je nachdem, welche Lichtschranke zuerst unterbrochen wird, kann festgestellt werden, aus welcher Richtung eine Person durch den Zugang getreten ist.

In einer alternativen Ausführungsvariante kann die Reihe aus Sendern und Empfängern in der Türzarge weiter fortgeführt sein, so dass der gesamte Zugang ebenfalls durch eine Überwachungsfläche überwacht wird. Dies bedeutet, dass auch in der Türzarge abwechselnd nebeneinander ein Sender und ein Empfänger äquidistant, beispielsweise in einem Abstand von 30cm derart gegenüberliegend angeordnet sein können, dass zumindest ein Empfänger ein Detektionssignal eines der gegenüberliegenden Sender empfängt.

Das weitere Trägerelement, insbesondere die Türzarge, kann in seinem bodenseitigen Bereich, insbesondere auf Höhe der übrigen Trägerelemente eine elektrische und/oder mechanische Schnittstelle zur entsprechenden modulartigen Verbindung mit den an den Zugang angrenzenden Trägerelementen aufweisen. Dabei kann insbesondere vorgesehen sein, dass das weitere Trägerelement vier derartige elektrische und/oder mechanische Schnittstellen aufweist, wobei sich jeweils zwei der Schnittstellen gegenüberliegen. Ein derartiges Trägerelement kann verwendet werden, wenn der dem zu überwachenden Raum vorgelagerte Raum ebenfalls überwacht und auch in diesem ein Sensorsystem integriert werden soll. Die den Zugang aufweisende Wand trägt dann auf Ihren beiden Wandseiten jeweils eine Reihe von Trägerelementen, wobei an beiden Wandseiten jeweils zwei Trägerelemente an dem Zugang anliegen. Das weitere Trägerelement verbindet dann nicht nur die in dem zu überwachenden ersten Raum vorhandenen Trägerelemente mit ihren Sendern und Empfängern untereinander und die Trägerelement mit ihren Sendern und Empfängern des diesem ersten Raum vorgelagerten zweiten Raumes untereinander sondern die beiden Sensorreihen in den Räumen machanisch auch miteinander.

Vorzugsweise kann das weitere Trägerelement das genannte zentrale Trägerelement mit der Steuer- und Auswerteeinheit bilden. Dies bedeutet, dass die Steuer- und Auswerteeinheit in dem weiteren Trägerelement angeordnet ist. Damit können alle leistenförmigen Trägerelemente konstruktiv und elektrisch im Wesentlichen gleichartig ausgebildet sein, wohingegen sich lediglich das weitere, den Zugang umgebende Trägerelement konstruktiv und elektrisch, insbesondere durch die Steuer- und Auswerteeinheit und in seiner U-förmigen Gestalt von den übrigen Trägerelementen unterscheidet.

Bevorzugt können die Sender als Infrarotsendedioden und die Empfänger als Infrarotempfangsdioden ausgeführt sein. Dies hat den Vorteil, dass die von den Sendern ausgesendeten Strahlen im nicht sichtbaren Bereich liegen und damit weder störend noch gesundheitsschädlich sind. Altemativ können einzelne oder alle Sender als Ultraschallsender ausgebildet sein, so dass die Detektionssignale entsprechend Ultraschallsignale sind.

Zur Bestimmung des Aufenthaltsorts einer Person in dem zu überwachenden Raum ist es notwendig, eine Zuordnung zwischen einem aktuell sendenden Sender und dem oder den das Detektionssignal empfangenden Empfängern zu bilden, da die Verbindungsgerade zwischen einem Sender und einem Empfänger die strahlengeometrische Grundlage zur Lokalisierung der Person bildet. Eine Zuordnung kann auf besonders einfache Weise dadurch erfolgen, dass jedem Sender und jedem Empfänger, oder zumindest jedem wenigstens einem Sender und einen Empfänger tragenden Trägerelement eine eindeutige Kennung zugeordnet ist. Diese Kennung kann beispielsweise eine Adresse sein, mittels derer der Sender und/oder der Empfänger am Bus adressierbar ist. Die Steuer und Auswerteeinheit kann dann zu einem bestimmten Zeitpunkt gezielt einen bestimmten Sender aktivieren, so dass dieser ein Detektionssignal aussendet, wobei die Empfangssignale der Empfänger dann diesem sendenden Sender eindeutig zugeordnet werden können.

Vorzugsweise hat jedes Trägerelement jeweils einen Speicher, in dem die dem Trägerelement zugeordnete eindeutige Kennung hinterlegt ist. Die Art des Trägerelements kann in der Kennung codiert sein. Dabei kann die Trägerelementart beispielsweise ein gerades Leistenelement fester Länge, ein gerades Leistenelement variabler Länge, ein Leistenelement für eine Innenecke oder ein Leistenelement für eine Außenecke sein. Auch weitere Trägerelementarten, beispielsweise gebogene, in Längsrichtung abgewinkelte oder auch rein distanzüberbrückende Leistenelemente sind ohne weiteres verwendbar und können durch eine ihnen zugeordnete und in ihrem Speicher gespeicherte Kennung codiert sein.

Zusätzlich kann auch die Länge eines Trägerelementes in der Kennung codiert sein. Beispielsweise kann ein Teilbereich der Kennung angeben, ob es sich um ein 30cm, 40cm, 50cm oder ein anderes Leistenelement bestimmter Länge handelt. In diesem Falle ist der Steuer- und Auswerteeinheit bekannt, welche numerische Länge das Trägerelement mit der durch die Kennung angegebenen Art hat. Gemäß einer weiteren Ausführungsvariante kann in dem Speicher des Trägerelements dessen Länge hinterlegt sein. Sowohl die Kennung als auch gegebenenfalls die konkrete Länge eines Trägerelements können automatisch, insbesondere bei der Inbetriebnahme des Sensorsystems jeweils an die Steuer- und Auswerteeinheit übertragen, alternativ jedoch auch von dieser nach Bedarf abgefragt werden,

Weiterhin kann in dem Speicher auch die jeweilige Kennung des unmittelbar benachbarten Trägerelementes hinterlegt sein. Die Kennung eines Trägerelementes, die Kennung des oder der unmittelbar benachbarten Trägerelemente und die Informationen über die Länge der Trägerelemente bieten die Möglichkeit, eine automatische Einmessung des zu überwachenden Raumes durchzuführen, so dass eine manuelle Vorgabe der räumlichen Struktur des Raumes nicht erforderlich ist. Dies wird nachfolgend erläutert.

Ein Trägerelement kann im Bereich seiner mechanischen Schnittstelle eine weitere, von der elektrischen Schnittstelle zur Weiterleitung des Busses unabhängige elektrische Schnittstelle aufweisen, über die das Trägerelement seine Kennung an das unmittelbar benachbarte Trägerelement senden kann, bzw. die Kennung dieses unmittelbar benachbarten Trägerelementes empfangen kann. Diese weitere elektrische Schnittstelle kann Bestandteil der mechanischen Schnittstelle sein, so dass die elektrische Schnittstelle bei mechanischer Verbindung der beiden Trägerelemente geschlossen wird, d.h. entsprechende elektrische Kontakte miteinander verbunden werden. Die weitere elektrische Schnittstelle dient dazu, dass sich benachbarte Trägerelemente gegenseitig über ihre Kennung informieren können. Dies erfolgt unabhängig vom Bussystem, da eine Adressierung auf dem Bus ohne Kenntnis einer entsprechenden Busadresse nicht möglich ist.

Der oder die Sender und der oder die Empfänger eines Trägerelementes können unmittelbar an den Bus angeschlossen sein. Bevorzugt weist das Trägerelement jedoch einen Mikrocontroller auf, der unmittelbar mit dem Bus verbunden ist und an den der oder die Sender respektive der oder die Empfänger des Trägerelementes angeschlossen sind. Der Controller verbindet damit den oder die Sender und den oder die Empfänger mit dem Bus des Sensorsystems. Entsprechend kann die Kennung des Trägerelementes dem Controller zugeordnet sein, insbesondere in einem Speicher hinterlegt sein, der mit dem Controller verbunden oder Teil desselben ist.

In einer vorteilhaften Weiterbildung des Sensorsystems kann eines der Trägerelemente, insbesondere ein Fußleistenelement, einschließlich das zentrale Trägerelement und/oder das Türzargenelement eine RFID (Radio Frequency Identification)-Leseeinheit aufweisen. Eine derartige RFID-Leseeinheit sendet ein elektromagnetisches Feld zur Aktivierung eines RFID-Transponders aus, der bei Aktivierung wiederum ein RFID-Funksignal zurücksendet, das von der RFID-Leseeinheit empfangen werden kann. Der RFID-Transponder kann an einem Gegenstand befestigt ist. Auf diese Weise kann beispielsweise das Einbringen eines mit einem derartigen RFID-Transponder ausgestatteten Gegenstands in den Raum respektive ein Heraustragen dieses Gegenstandes aus dem Raum erkannt werden.

Zum Betreiben des Sensorsystems zur Überwachung des zumindest teilweise geschlossenen Raumes, insbesondere zur Bestimmung des Aufenthaltsbereichs und/oder der Aufenthaltsart wenigstens einer Person in dem Raum wird vorgeschlagen, dass die Sender des Sensorsystems von der Steuer- und Auswerteeinheit gesteuert zeitlich nacheinander ein moduliertes Detektionssignal aussenden, das dann von einem oder mehreren Empfängern empfangen wird, wobei die Steuer- und Auswerteeinheit die Empfängersignale der Empfänger anschließend daraufhin auswertet, welcher Empfänger eines bestimmten Trägerelementes das Detektionssignal welches Senders eines bestimmten Trägerelements empfangen hat, aus den Empfängersignalen der Aufenthaltsbereich und/oder die Aufenthaltsart der Person in dem Raum ermittelt wird, und bei der Auswertung festgestellt wird, welcher Empfänger in Bezug zu welchem Sender gegenüber dem Fall eines leeren Raumes kein von dem Sender ausgesendetes Detektionssignal empfängt, und wobei der Aufenthaltsbereich der Person oder eines Gegenstandes aus der strahlengeometrischen Überlagerung der Richtungen, aus denen keine Detektionssignale empfangen werden, ermittelt wird. Durch die Ansteuerung der Sender zeitlich nacheinander sendet zu einem bestimmten Zeitpunkt jeweils nur ein einziger Sender ein entsprechendes Detektionssignal aus. Dies entspricht einem zeitlichen Multiplexing. Sofern die Sender in der bandförmigen Reihe zu einem Ring geschlossen sind, kann von einer "zeitlichen Rotation" der Ansteuerung gesprochen werden.

Der zu bestimmende Aufenthaltsbereich umfasst mehr oder weniger genau den Aufenthaltsort einer zu lokalisierenden Person. Die Genauigkeit ist dabei abhängig von der Anzahl respektive der Dichte der in dem Raum angeordneten Empfänger.

Erfindungsgemäß wird bei der Auswertung festgestellt, welcher Empfänger in Bezug zu welchem Sender gegenüber dem Fall eines leeren, insbesondere personenleeren Raumes (Normalfall) kein von dem Sender ausgesendetes Detektionssignal empfängt, wobei der Aufenthaltsbereich einer Person aus der strahlengeometrischen Überlagerung der Strahlrichtungen, aus denen keine Detektionssignale empfangen werden, ermittelt wird. Diese Richtungen entsprechen den direkten Verbindungsgraden zwischen einem Empfänger und einem sendenden Sender oder den Verbindungsgeraden zwischen einem Sender und einem Spiegel und einem Spiegel und einem Empfänger.

In einer bevorzugten Weiterbildung des Verfahrens kann bei der Auswertung die Empfangsintensität eines Detektionssignals am Empfänger berücksichtigt werden. Dadurch ist feststellbar, ob ein von einem Sender am Ort eines Empfängers empfangenes Detektionssignal aus einer Richtung kommt, die auf einer Strahlengeraden liegt, welche den Aufenthaltsbereich der Person lediglich tangiert, so dass dieses Detektionssignal lediglich geschwächt und nicht vollständig unterbrochen ist. Die Genauigkeit der Aufenthaltsbestimmung kann dadurch verbessert werden.

Die Aufenthaltsart wird aus der Größe des Aufenthaltsbereichs ermittelt. Dabei wird unter Aufenthaltsart insbesondere verstanden, ob sich eine Person stehend oder liegend in dem Raum befindet. In einer stehenden Position wird die Überwachungsfläche je nach Höhe, in der die Sender und Empfänger im Raum angeordnet sind an zwei Stellen, nämlich durch die Beine oder durch die Füße der zu lokalisierenden Person durchdrungen. Zwischen diesen beiden Stellen gehen die Detektionssignale der Sender hindurch, so dass sie unbeeinträchtigt von gegenüberliegenden Empfängern empfangen werden können. Befindet sich die Person in liegender Verfassung im Raum, wird dagegen die Überwachungsfläche in einem zusammenhängenden, großen Bereich unterbrochen. Dies bedeutet, dass mehrere benachbarte Empfänger keine Detektionssignale empfangen.

Wie bereits angesprochen, ist es für eine exakte Bestimmung des Aufenthaltsortes einer Person im Raum, insbesondere unter Angabe von Koordinaten, notwendig, die konkrete geometrische Struktur des Raumes zu kennen. Vorzugsweise kann bei Inbetriebnahme des Sensorssystems eine automatische geometrische Einmessung des Raumes erfolgen. Dies kann dadurch erreicht werden, dass die Trägerelemente bei der Inbetriebnahme des Sensorsystems Informationen über ihre Art, die Trägerelementart der unmittelbar benachbarten Trägerelemente und zumindest ein Teil der Trägerelemente, insbesondere die längenvariablen Trägerelemente, jeweils ihre Länge an die zentrale Steuer- und Auswerteeinheit übermitteln, wobei die geometrische Einmessung des Raumes auf der Grundlage dieser Informationen erfolgt. Sind von allen in der bandförmigen Reihe verbundenen Trägerelementen die Kennungen und Längen bekannt, kann rechnerisch die geometrische Struktur ermittelt werden. Dabei kann die Auswerte- und Steuereinheit aus der Kennung erkennen, welche Art von Trägerelement an welcher Stelle des Raumes verbaut ist. Diese Kenntnis erhält die Steuer- und Auswerteeinheit aus der Kennung der Trägerelemente sowie der Information, welches Trägerelement zu welchem benachbart, d.h. mit diesem verbunden ist. Aus einer bestimmten Kennung kann die Steuer- und Auswerteeinheit ermitteln, welche Länge dieses Trägerelement aufweist.

Hierfür können die entsprechenden Längen den Trägerelementarten zugeordnet, beispielsweise in Form einer Tabelle in der Steuer- und Auswerteeinheit hinterlegt seien. Lediglich bei den Trägerelementen veränderlicher Länge ist es notwendig, dass diese ihre Länge der Steuer- und Auswerteeinheit ebenfalls mitteilen. Insbesondere sollte dies auch von dem weiteren Trägerelement, insbesondere der Türzarge erfolgen, so dass auch hier auf eine manuelle Eingabe verzichtet werden kann.

Damit die einzelnen Trägerelemente in Kenntnis der Kennungen ihrer unmittelbaren Nachbarn gelangen, kann vorgesehen sein, dass die Trägerelemente bei der Inbetriebnahme des Sensorssystems zunächst jeweils ihren unmittelbar benachbarten Trägerelementen ihrer Art, vorzugsweise durch Übermittlung ihrer Kennungen mitteilen. Dies kann über die weitere elektrische Schnittstelle erfolgen.

Es sei angemerkt, dass die vorliegende Erfindung nicht auf die konkret dargstellten Merkmale beschränkt ist. In Abhängigkeit der Raumgeometrie kann die Überwachungsfläche beispielsweise auch - zumindest in einer Raumrichtungsphärisch sein oder eine ebene Überwachungsfläche schräg im Raum liegen. In entsprechender Weise können dann die Trägerelemente an den Wänden des Raumes derart angeordnet werden, dass eine solche Überwachungsfläche gebildet wird. Weiterhin können konstruktiv speziell ausgebildete Trägerelemente vorhanden sein, um besondere Wohnstrukturen wie Treppen, Absätze oder gebogene Bereiche ebenfalls zu überwachen. Weiterhin können einzelne, insbesondere sich gegenüberliegende Trägerelemente auch mehr als zwei, beispielsweise drei elektrische und/oder mechanische Schnittstellen aufweisen, um weitere Überwachungsflächen aufzubauen. So kann beispielsweise ein Trägerelement T-förmig ausgebildet sein. Durch Verbindung mit anderen Trägerelementen an seinen Stirnseiten kann dieses Trägerelement Teil einer ersten Reihe sein, die eine sich parallel zum Boden erstreckende Überwachungsfläche begrenzt. Weiterhin kann das Trägerelement an einer Längsseite eine weitere mechanische und/oder elektrische Schnittstelle zum Ankoppeln eines weiteren Trägerelements, so dass sich von dem Trägerelement eine weitere Reihe wegerstreckt, die vorzugsweise bis zu einem anderen, gegenüberliegenden T-förmigen Trägerelementes reicht und mit deren längsseitiger Schnittstelle verbunden ist. Diese zusätzliche Reihe definiert eine weitere Überwachungsebene, die bei rechtwinkligem Abgang der Reihe von den T-förmigen Trägerelementen senkrecht zu der bodenparallelen Überwachungsebene liegt. Des Weiteren können auch andere Sensortechnologien verwendet, insbesondere mit der vorgeschlagenen Technologie kombiniert werden. Auch kann die Kommunikation über den Bus mit beliebigen Protokollen erfolgen.

Weitere Merkmale und Vorteile der Erfindung werden anhand des nachfolgenden Ausführungsbeispiels und der beigefügten Figuren näher erläutert.

Es zeigen:
- Figur 1:: Prinzipdarstellung eines Raumes mit integriertem Sensorsystem
- Figur 2:: Dreidimensionale Ansicht eines Raumes mit Sensorsystem von oben
- Figur 3:: Wiedergabe erkannter Muster in dem Raum nach Auswertung von Detektionssignalen

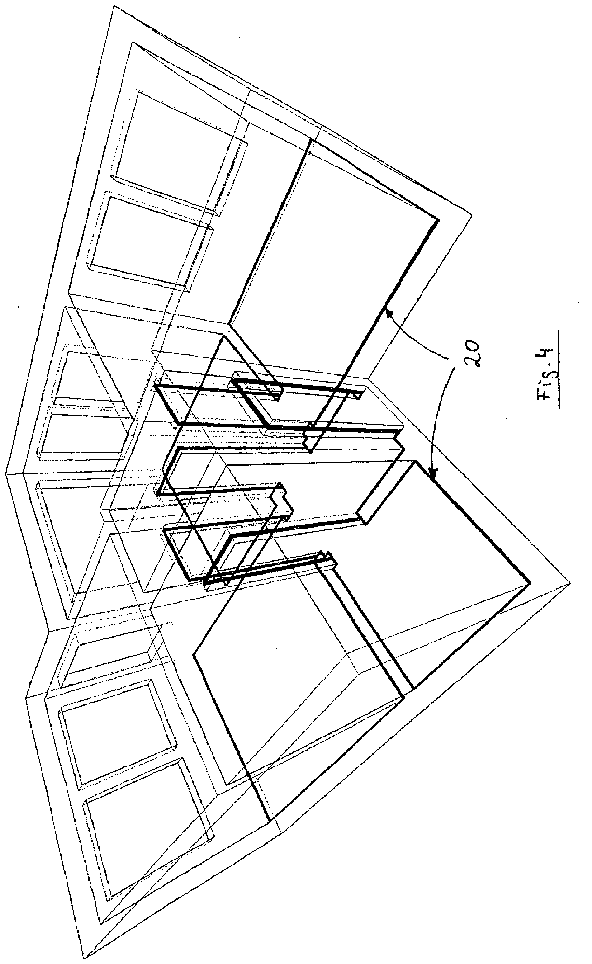

- Figur 4:: Perspektivische Darstellung zusammenhängender Räume mit integriertem bandförmigem Sensorsystem
- Figur 5:: Darstellung des bandförmigen Sensorsystems ohne Räume mit Fußleisten und aktiven Türzargen als Trägerelemente

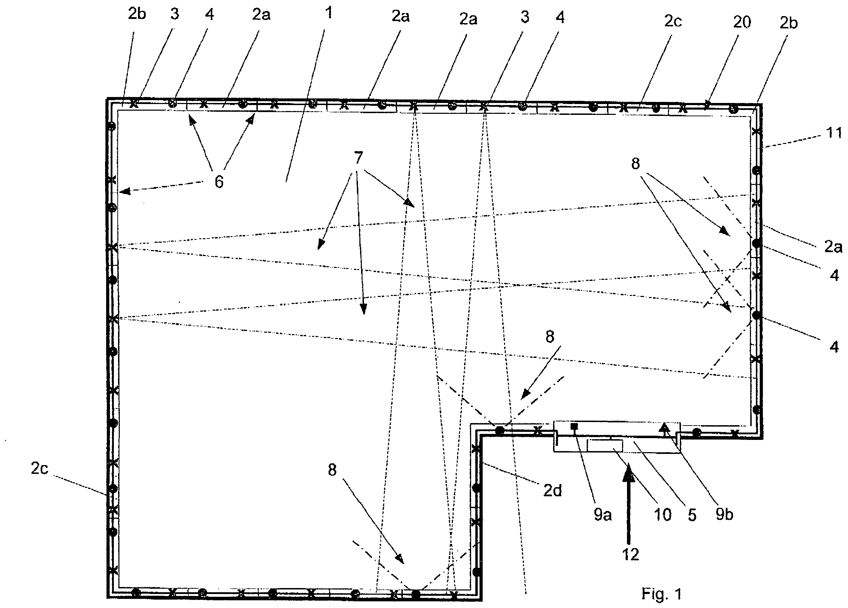

Figur 1 zeigt ein Sensorsystem in Gestalt einer bandförmigen Reihe 20 aus Sendern 3 und Empfängern 4, die in einem Raum 1 integriert ist. Es sind eine Vielzahl von Sendern 3 zur Aussendung gerichteter, optischer Detektionssignale sowie eine Vielzahl von Empfängern 4 zum Empfang dieser Detektionssignale vorgesehen, die alle an einen Bus 11 angeschlossen sind. Über den Bus 11 sind die Sender 3 und der Empfänger 4 miteinander sowie mit einer zentralen Steuer- und Auswerteeinheit 10 verbunden. Die bandförmige Reihe aus Sendern 3 und Empfängern 4, nachfolgend auch Raumband genannt, ist an der Innenwand des Raumes 1 angeordnet. Sie schließt eine Überwachungsfläche ein, die sich parallel zu dem Raumboden erstreckt. Die Sender 3 und Empfänger 4 sind derart angeordnet, dass die Detektionssignale jedes Senders 3 von mindestens einem in Strahlrichtung gegenüberliegenden Empfänger empfangen werden.

Die Sender sind als Infrarotsendedioden ausgebildet und besitzen einen Emissionsbereich 7, der durch einen Öffnungswinkel von 10° bis 20° definiert ist, innerhalb welchem sie ein Infrarotsignal aussenden. Demgegenüber sind die Empfänger als Infrarotempfänger ausgebildet und weisen einen Erfassungsbereich 8 mit einem Öffnungswinkel von Mehr als 90° auf. Die Emissionsbereiche 7 der Sendedioden 3 und die Detektionsbereiche 8 der Empfängerdioden 4 sind in Figur 1 durch gestrichelte Linien bzw. punkt-gestrichelte Linien dargestellt.

Ein Sender 3 und ein Empfänger 4 sind gemeinsam in einem leistenförmigen Trägerelement 2a, 2b, 2c, 2d integriert bzw. derart auf dem Trägerelement 2a, 2b, 2c, 2d montiert, dass ihr Emissionsbereich 7 bzw. Detektionsbereich 8 in den Raum 1 gerichtet ist. In Figur 1 sind zum Aufbau des Raumbandes 20 vier verschiedene Arten von Trägerelementen 2a, 2b, 2c, 2d verwendet. Ein erstes Trägerelement 2a ist ein gerades Element konstanter Länge, beispielsweise 30cm. Mehrere dieser Elemente können modulartig aneinandergereiht werden, bis sich eine nahezu raumlange Reihe ergibt. Um das Raumband 20 entlang der Ecken des Raumes 1 zu führen, sind Trägerelemente 2b für die Innenecken sowie ein Trägerelement 2d für die Außenecke vorgesehen. Dabei ist ein Trägerelement 2b in Gestalt einer Innenecke dadurch gekennzeichnet, dass der Emissionsbereich 7 eines auf einem der Schenkel des Inneneckenelementes 2b angeordneten Senders 3 den Detektionsbereich 8 eines auf dem anderen Schenkel angeordneten Empfängers 4 überlappt, ohne dass der Empfänger 4 den Sender 3 "sieht". Demgegenüber ist ein Trägerelement 2d in Gestalt einer Außenecke derart ausgebildet, dass der Emissionsbereich 7 eines auf einem Schenkel dieses Außeneckenelementes 2d angeordneten Senders 3 nicht mit dem Detektionsbereich 8 eines auf dem anderen Schenkel angeordneten Empfängers 4 überlappt,

Um eine Reihe 20 aus geraden Trägerelementen 2a einschließlich winkligen Trägerelementen 2b, 2d an die Wandlänge einer Raumwand anzupassen, ist stets ein in der Länge variables gerades Trägerelement 2c notwendig. Ein solches ist in der Regel an jeder Wandseite erforderlich. Zur Änderung seiner Länge kann das Trägerelement 2c teleskopierbar sein. Die Länge kann beispielsweise zwischen 20cm und 50 cm variiert werden.

Jedes der leistenförmigen Trägerelemente 2a, 2b, 2c, 2d weist mindestens einen Sender 3 und einen Empfänger 4 auf. In Figur 1 sind die geraden Trägerelemente 2a, 2c jeweils mit einem Sender 3 und einem Empfänger 4 ausgestattet, wohingegen die winkligen Trägerelemente 2b, 2d jeweils zwei Sender 3 und zwei Empfänger 4 aufweisen, wobei jeweils ein Sender 3 und ein Empfänger 4 auf jeweils einem der leistenförmigen Schenkel der winkligen Trägerelemente 2b, 2d angeordnet ist.

Bereits über den Bus 11 ist das Sensorsystem elektrisch zu einem geschlossenen Ring ausgebildet. Um eine schnelle Montage des Sensorsystems im Raum zu gewährleisten, weist jedes Trägerelement 2a, 2b, 2c, 2d an seinen Stirnseiten jeweils eine mechanische Schnittstelle 6 auf. Über diese Schnittstelle 6 sind zwei Trägerelemente 2a, 2b, 2c, 2d rastend ineinander zusammengesteckt. Dabei weist die Stirnseite der Trägerelemente 2a, 2b, 2c, 2d jeweils zusätzlich eine elektrische Schnittstelle auf, durch die der Bus 11 von Trägerelement zu Trägerelement weitergeführt wird. Die Trägerelemente 2a, 2b, 2c, 2d sind in Gestalt, Abmessungen und Querschnitt in Form von Fußleisten ausgebildet, so dass das Sensorsystem unauffällig im Raum integriert ist und die Überwachungsfläche wenige Zentimeter über dem Raumboden liegt.

Der Raum 1 weist einen Zugang 12 auf, durch den der Raum 1 betretbar ist. Der Zugang 12 ist durch eine nicht dargestellte Tür verschließbar. Die Türzarge stellt ein weiteres Trägerelement 5 des Sensorsystems dar, durch das der Bus 11 geführt ist, und das bodenseitig entsprechende mechanische/elektrische Schnittstellen aufweist, mittels derer die an den Zugang angrenzenden anderen Trägerelemente 2d über ihre jeweiligen Schnittstellen mit der Türzarge 5 mechanisch und elektrisch verbunden sind. Des Weiteren weist die Türzarge 5 die zentrale Steuer- und Auswerteinheit 10 auf, die ebenfalls an den Bus 11 angeschlossen ist und die Sensoren 3 steuert sowie die Empfängersignale der Empfänger 4 analysiert. In der Türzarge 5 ist einen Sensor 9a, 9b zur Durchtrittserkennung integriert. Der Sensor ist dabei als Lichtschranke ausgebildet, wobei ein Infrarotsender 9a und ein Infrarotempfänger 9b gegenüberliegend angeordnet sind. Die Türzarge 5 stellt damit ein die übrigen Trägerelemente 2a, 2b, 2c, 2d verbindendes Trägerelement dar, dass die Fußleistenelemente managt und das Betreten des Raumes erkennt. Dabei kann das Türzargenelement 5 nicht nur die in dem Raum 1 angeordneten Trägerelemente 2a, 2b, 2c, 2d miteinander verbinden. Es kann darüber hinaus zwei weitere mechanische und elektrische Schnittstellen aufweisen, um die Fußleistenelemente eines benachbarten Raumes, der dem Zugang 12 vorgelagert ist, anzuschließen bzw. miteinander zu verbinden. Entsprechende Schnittstellen sind in Figur 1 am Türzargenelement 5 angedeutet.

Jedes Trägerelement 2a, 2b, 2c, 2d des Sensorsystems weist eine eindeutige Kennung auf, durch die das Trägerelement 2a, 2b, 2c, 2d bzw. der Sender 3 respektive der Empfänger 4 dieses Trägerelementes 2a, 2b, 2c, 2d am Bus identifizierbar ist. Die Kennung eines Trägerelements 2a, 2b, 2c, 2d ist dabei in einem Speicher desselben hinterlegt.

Die Stirnseiten der Trägerelemente 2a, 2b, 2c, 2d weisen zusätzlich zu der elektrischen Schnittstelle zur Anbindung eines Trägerelementes 2a, 2b, 2c, 2d an den Bus eine weitere elektrische Schnittstelle auf, über die zwei benachbarte Trägerelemente 2a, 2b, 2c, 2d Ihre jeweilige Kennung austauschen können. Hierfür sind im Bereich der mechanischen Schnittstelle elektrische Kontakte vorgesehen, die beim Zusammenstecken zweier Trägerelemente 2a, 2b, 2c, 2d kontaktiert werden. Zur Übertragung der Kennung kann jedes Trägerelement 2a, 2b, 2c, 2d jeweils einen Mikroprozessor aufweisen, der die Übertragung steuert. Die Übertragung kann bei der Inbetriebnahme des Sensorsystems erfolgen. Hierfür kann der Prozessor von dem Bus 11 mit Energie versorgt werden. Der Abstand zwischen einem Sensor und einem Empfänger auf einem Trägerelement beträgt vorzugsweise zwischen 5cm und 15cm. Die Länge bzw. Schenkellänge der längenkonstanten Trägerelemente 2a, 2b, 2d beträgt 30 cm.

Bei der Inbetriebnahme des Sensorsystems übertragen zunächst die Trägerelemente 2a, 2b, 2c, 2d ihre Kennung jeweils an ihre unmittelbaren Nachbarn, so dass jedes Trägerelement 2a, 2b, 2c, 2d über die unmittelbaren Nachbarn Kenntnis besitzt. Anschließend übertragen alle Trägerelemente 2a, 2b, 2c, 2d ihre eigene Kennung sowie die Kennungen der unmittelbar benachbarten Trägerelemente 2a, 2b, 2c, 2d an die zentrale Steuer- und Auswerteeinheit 10. In der Kennung ist die Art des Trägerelementes 2a, 2b, 2c, 2d kodiert, so dass die Steuer- und Auswerteeinheit 10 eine geometrische Struktur des Raumes 1 ermitteln kann. Um zusätzlich zu dieser geometrischen Struktur die konkreten Abmaße des Raumes zu erhalten, wird die Länge der einzelnen Trägerelemente 2a, 2b, 2c, 2d benötigt. Diese Länge kann ebenfalls zumindest in den Trägerelementen 2a, 2b, 2d fester Länge in ihren Kennungen codiert sein. Alternativ kann in der Steuer- und Auswerteeinheit eine Tabelle hinterlegt sein, die zu einer bestimmten Trägerelementart eine entsprechende Länge angibt. Zumindest übertragen jedoch die Trägerelemente 2c variabler Länge ihre jeweilige konkrete Länge an die Steuer- und Auswerteeinheit 10. Die konkrete Länge eines längenvariablen Trägerelements 2c kann bei der Montage dieses Trägerelementes selbsttätig gemessen und in einem Speicher hinterlegt werden. Aus den übermittelten Längeninformationen_{,} einschließlich der Information der Länge bzw. Breite des Türzargenelements 5 kann die zentrale Steuer- und Auswerteeinheit 10 einer Einmessung des Raumes, d.h. seine geometrische Struktur einschließlich der Abmessungen ermitteln, so dass eine genaue Koordinatenangabe einer zu lokalisierenden Person im Raum möglich ist.

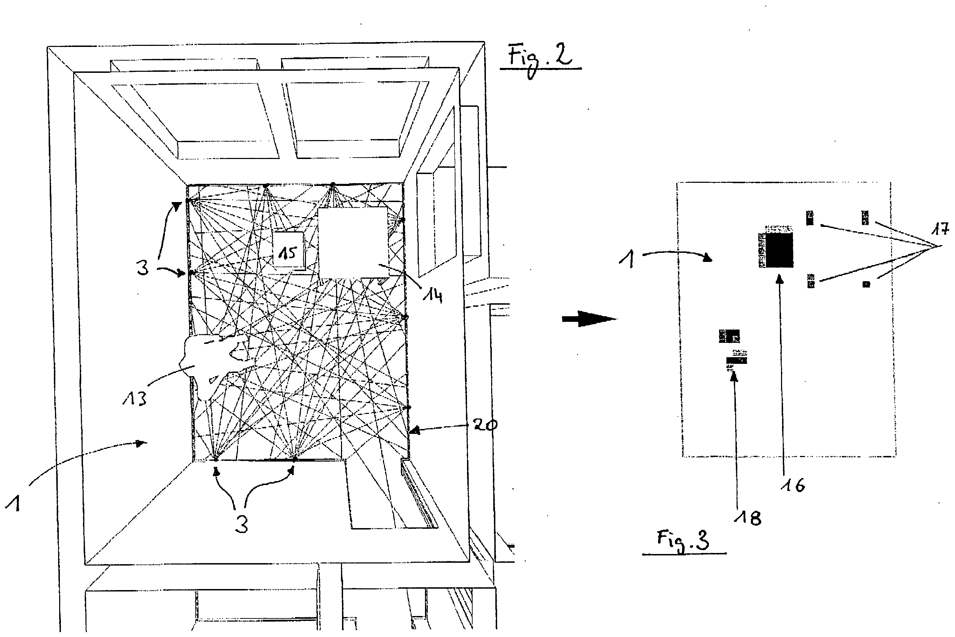

Hierfür werden die Sender 3 des Sensorsystems von der Steuer- und Auswerteeinheit 10 derart gesteuert, dass sie zeitlich nacheinander ein moduliertes Detektionssignal aussenden, das jeweils von einem oder mehreren in Strahlrichtung gegenüberliegenden Empfängern 4 empfangen wird. Die Steuer- und Auswerteinheit 10 wertet dann die Empfängersignale der Empfänger 4 daraufhin aus, welche Empfänger 4 eines bestimmten Trägerelementes 2a, 2b, 2c, 2d, 5 das Detektionssignal welches Senders 3 eines bestimmten Trägerelementes 2a, 2b, 2c, 2d, 5 empfangen. Bei der Auswertung wird festgestellt, welche Empfänger 4 in Bezug zu welchem Sender 3 gegenüber dem Fall eines personenleeren Raums kein von dem Sender 3 ausgesendetes Detektionssignal empfangen hat, wobei der Aufenthaltsbereich einer Person aus der strahlengeometrischen Überlagerung der Strahlrichtungen, aus denen keine Detektionssignale empfangen wurden, ermittelt wird. Dies wird anhand der Figuren 2 und 3 veranschaulicht.

Figur 2 zeigt eine perspektivische Darstellung des Raumes 1 von oben, in dem sich eine Person 13, ein Tisch 14 sowie ein Hocker 15 befinden. Von dem Sensorsystem sind lediglich die Sender 3 dargestellt, wobei in dem Raum 1 zehn derartige Sender 3 angeordnet sind. Die Füße der Person, die Beine des Tisches 4 sowie der Hocker 15 unterbrechen die Strahlen der Sender 3 derart, dass von einem Sender ausgesendete Strahlen von bestimmten in Strahlrichtung gegenüberliegenden Empfängern nicht empfangen werden können. Die Auswertung, welcher der Empfänger 4 keine Detektionssignale eines in Strahlrichtung gegenüberliegenden Senders 3 empfängt, führt zu einem Muster, das in Figur 3 dargestellt ist. Aus der strahlengeometrischen Überlagerung der Strahlrichtungen, aus denen kein Detektionssignal empfangen wird, können feste Muster 16, 17, die den beiden festen Objekten Hocker 15 und Tisch 14 zugeordnet sind, sowie ein bewegtes Muster 18 ermittelt werden, das den Füßen der Person 13 zuzuordnen ist.

Figur 3 veranschaulicht die Integration des Sensorsystems in Gestalt des Raumbandes 20, das in mehreren Räumen einer Wohnung integriert ist. Das Raumband 20 ist dabei eine Vorrichtung, die mit einer einfachen Topologie, insbesondere durch Integration in Fußleisten und Türzargen, eine Wohnung vollständig und implizit geometrisch abbilden kann. Insbesondere wird der Aufenthaltsort von Personen und Objekten ermittelt, um sinnvolle Kontexte daraus zu generieren. Dabei ist die Ermittlung unscharf genug, um die Privatsphäre der Bewohner nicht zu stören. Es gewährleistet damit eine mittel-präzise, anonyme Ermittlung von Personenstandorten als Grundlage für kontext-basierte Informationsbereitstellung sowie die Feststellung, ob Personen stehen oder auf dem Boden liegen.

Die Informationen sind insbesondere relevant für die Unterstützung älterer oder kranker Menschen im Alltag. Die Detektion von Bewegung, Aufenthaltsort und Aufenthaltsart, d.h. Stehen oder Liegen, kann beispielsweise dem Schalten von Beleuchtung oder zur Weitergabe an andere Systeme wie Personenhilfssysteme, Alarmanlagen, Heizung oder Bildschirm dienen.

Wie bereits dargelegt, ist die technische Realisierung des Sensorssystems derart, dass in die Systemfußleisten systematisch lR-Empfänger und IR-Sender integriert sind, die den Boden überstreichen und daraus Standartinformationen ableiten, wie dies in Figur 2 dargestellt ist. Die Zargen enthalten Steuer- und Auswerteeinheiten 10, die die Informationen der lR-Empfänger 4 der angrenzenden Räume 1 auswerten. Die Systemfußleiste ist steckbar aus Trägerelementen 2a, 2b, 2c, 2d einer bestimmten Mindestgröße, so dass für beliebige rechtwinklige Räume 1 eine Fußleiste erstellt werden kann.

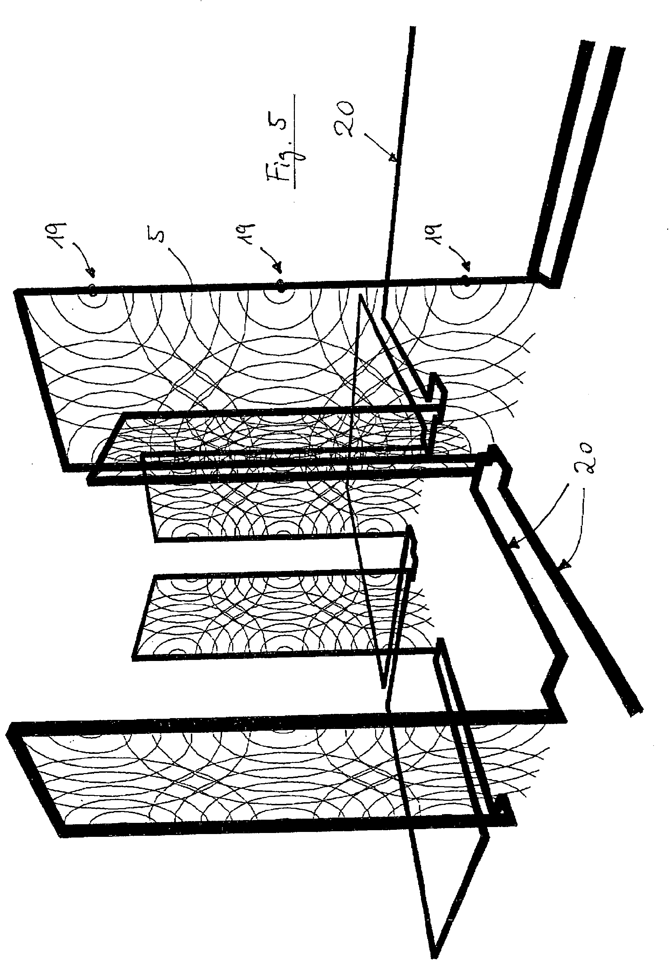

Figur 5 zeigt eine stilisierte Darstellung des Raumbandes 20 ohne Räume. Es wird deutlich, dass sich das Raumband 20 wie ein Sensorband bodenseitig der nicht dargestellten Räume entlang der Wände sowie entlang der Türzargen 5 erstreckt. Weiterhin ist in Figur 5 veranschaulicht, dass die Türzargen RFID-Leser 19 enthalten, mittels derer RFID-Transponder von Objekten wie Geräten oder Möbeln zusätzlich zu deren räumlicher Zuordnung nachgehalten werden können. Die Steuer- und Auswerteeinheiten 10 in den Türzargen 5 kommunizieren über ein Internetprotokoll (lP) bzw. gebräuchliche Feldbusprotokolle mit anderen Zargen, mit Gebäudeautomationssystemen, Settop-Boxen oder ähnlichen Kommunikationseinrichtungen.

Die intelligente Verbindung von aktiven Zargen und Fußleisten bringt eine Reihe vorteilhafter Ergebnisse. Dabei kann wie vorstehend beschrieben die Relation aus Zargen und Fußleisten aus sich selbst heraus, d.h. ohne zusätzliche Information von Installateur oder Nutzer eine vollständige Raumgeometrie erstellen. Es sind darüber hinaus, keine Teile erforderlich, die am Körper zu tragen wären, um eine Person 13 im Raum 1 zu lokalisieren. Der Standort von Personen 13 im Raum 1 nach dem Muster der Fußstandorte kann auf einfache Weise schnell und effizient ermittelt werden, wobei zusätzlich aus der Größe des Aufenthaltsbereichs auch unterschieden werden kann, ob sich eine Person 13 stehend oder liegend auf dem Boden des Raumes 1 befindet. Die zum Aufbau des Sensorsystems notwenigen Trägerelemente 2a, 2b, 2c, 2d können unauffällig in dem Raum 1 integriert und ohne großen Aufwand auch nachträglich in Räume eingebaut werden. Systembedingt ist eine hohe Genauigkeit von < 0,5 m Abweichung zu erwarten.

## Patentansprüche

1. Verfahren zur Überwachung eines zumindest teilweise geschlossenen Raumes (1) zur Bestimmung des Aufenthaltsbereichs wenigstens einer Person (13) in dem Raum (1 und ob sich eine Person (13) im Raum (1) stehend oder liegend befindet, mittels eines Sensorsystems, mit einer Vielzahl von Sendern (3) zur Aussendung von Detektionssignalen, insbesondere optischer Detektionssignale, und Empfängern (4) zum Empfang dieser Detektionssignale, die in dem Raum (1) angeordnet und über einen Bus (11) miteinander und mit einer Steuer- und Auswerteeinheit (10) verbunden sind, wobei die Sender (3) und Empfänger (4) zumindest eine bandförmige Reihe (20) bilden und auf oder in leistenförmigen Trägerelementen (2a, 2b, 2c, 2d) angeordnet sind, und die Reihe (20) eine über dem Boden des Raumes (1) liegende Überwachungsfläche zumindest teilweise begrenzend einschließt, wobei die Sender (3) und Empfänger (4) entlang der Reihe (20) derart angeordnet sind, dass das Detektionssignal eines Senders (3) von mindestens einem der Empfänger (4) empfangbar ist, wobei die Sender (3) des Sensorsystems von der Steuer- und Auswerteeinheit (10) derart gesteuert werden, dass sie zeitlich nacheinander ein moduliertes Detektionssignal aussenden, das jeweils von einem oder mehreren Empfängern (4) empfangen wird, dass die Steuer- und Auswerteeinheit (10) die Empfängersignale der Empfänger (4) anschließend daraufhin auswertet, welcher Empfänger (4) eines bestimmten Trägerelements (2a, 2b, 2c, 2d, 5) das Detektionssignal welches Senders (3) eines bestimmten Trägerelements (2a, 2b, 2c, 2d, 5) empfängt, und dass aus den Empfängersignalen der Aufenthaltsbereich der Person (13) in dem Raum (1) und aus der Größe des Aufenthaltsbereichs ermittelt wird, ob sich die Person (13) im Raum (1) stehend oder liegend befindet, wobei bei der Auswertung festgestellt wird, welcher Empfänger (4) in Bezug zu welchem Sender (3) gegenüber dem Fall eines leeren Raumes (1) kein von dem Sender (3) ausgesendetes Detektionssignal empfängt, und der Aufenthaltsbereich der Person (13) oder eines Gegenstandes (14, 15) aus der strahlengeometrischen Überlagerung der Richtungen, aus denen keine Detektionssignale empfangen werden, ermittelt wird.

2. Verfahren nach Anspruch 1 wobei bei der Inbetriebnahme des Sensorsystems eine automatische geometrische Einmessung des Raumes (1) erfolgt.

3. Verfahren nach Anspruch 2, wobei die Trägerelemente (2a, 2b, 2c, 2d, 5) bei der Inbetriebnahme des Sensorsystems Informationen über ihre Art, die Trägerelementart der unmittelbar benachbarten Trägerelemente (2a, 2b, 2c, 2d, 5) und zumindest ein Teil der Trägerelemente (2c, 5) jeweils seine Länge an die zentrale Steuer- und Auswerteeinheit (10) übermitteln und die geometrische Einmessung des Raumes (1) auf der Grundlage dieser Informationen erfolgt.

4. Verfahren nach einem der Ansprüche 1 bis 3, wobei die Trägerelemente (2a, 2b, 2c, 2d, 5) bei der Inbetriebnahme des Sensorsystems zunächst jeweils ihren unmittelbar benachbarten Trägerelementen (2a, 2b, 2c, 2d, 5) ihre Art, vorzugsweise durch Übermittlung ihrer Kennung, mitteilen.

## Claims

1. Method for monitoring an at least partially enclosed room (1) to determine the area occupied by at least one person (13) in the room (1) and whether a person (13) present in the room (1) is standing up or lying down, by means of a sensor system with multiple transmitters (3) for the transmission of detection signals, notably optical detection signals, and receivers (4) to receive these detection signals, that are arranged in the room (1) and connected via a bus (11) to each other and to a control and evaluation unit (10), in which the transmitters (3) and receivers (4) form at least one linear row (20) and are arranged on or in rail-shaped carriers (2a, 2b, 2c, 2d) and the row (20) encloses and at least partially delimits a monitoring area lying above the floor of the room (1), in which the transmitters (3) and receivers (4) are arranged along the row (20) so that the detection signal of a transmitter (3) can be received by at least one receiver (4), in which the transmitters (3) of the sensor system are controlled by the control and evaluation unit (10) so that they transmit a modulated detection signal one after the other that is respectively received by one or more receivers (4), the control and evaluation unit (10) then evaluates the receiver signals of the receivers (4) to determine which receiver (4) of a specific carrier (2a, 2b, 2c, 2d, 5) is receiving the detection signal of which transmitter (3) of a specific carrier (2a, 2b, 2c, 2d, 5), and the area occupied by the person (13) in the room (1) is determined from the receiver signals, and whether the person (13) in the room (1) is standing up or lying down is determined from the size of the occupied area, in which it is determined during evaluation which receiver (4) in reference to which transmitter (3) compared to the case of an empty room (1) is not receiving a detection signal transmitted by the transmitter (3), and the area occupied by the person (13) or an object (14, 15) is determined from the beam geometry overlay of the directions from which no detection signals are received.

2. Method according to claim 1, in which a geometric calibration of the room (1) is automatically performed during commissioning of the sensor system.

3. Method according to claim 2, in which the carriers (2a, 2b, 2c, 2d, 5), during commissioning of the sensor system, transmit information about their type and the carrier type of the directly adjacent carriers (2a, 2b, 2c, 2d, 5) and at least part of the carriers (2c, 5) respectively transmit their length to the central control and evaluation unit (10), and the geometric calibration of the room (1) is performed based on this information.

4. Method according to one of the claims 1 through 3, in which the carriers (2a, 2b, 2c, 2d, 5), during commissioning of the sensor system, initially notify the carriers (2a, 2b, 2c, 2d, 5) directly adjacent to them of their type, preferably by transmitting their identifier.

## Revendications

1. Procédé de surveillance d'un espace au moins partiellement fermé (1) pour déterminer la zone de séjour d'au moins une personne (13) dans l'espace (1) et si une personne (13) est debout ou couchée dans l'espace (1), au moyen d'un système de capteurs composé d'un grand nombre d'émetteurs (3) de signaux de détection, plus particulièrement de signaux de détection optique et de récepteurs (4) de ces signaux de détection, lesquels sont disposés dans l'espace (1) et reliés entre eux et à une unité de commande et d'analyse (10) par un bus (11), sachant que les émetteurs (3) et les récepteurs (4) forment au moins une rangée (20) en forme de bande et sont disposés sur ou dans des éléments porteurs en forme de barre (2a, 2b, 2c, 2d), et que la rangée (20) comprend une surface de surveillance située au-dessus du sol de l'espace (1) au moins partiellement limitée, sachant que les émetteurs (3) et les récepteurs (4) le long de la rangée (20) sont disposé de telle façon que le signal de détection d'un émetteur (3) peut être reçu par au moins un récepteurs (4), les émetteurs (3) du système de détection étant commandés par l'unité de commande et d'analyse (10) de telle façon qu'ils émettent successivement dans le temps un signal de détection modulé reçu par au moins un récepteur (4), que l'unité de commande et d'analyse (10) analyse en suite les signaux reçus des récepteurs (4), et détermine quel récepteur (4) d'un élément porteur donné (2a, 2b, 2c, 2d, 5) reçoit le signal de détection de quel émetteur (3) d'un élément porteur donné (2a, 2b, 2c, 2d, 5), et que les signaux des récepteurs servent à déterminer la zone de séjour de la personne (13) dans l'espace (1) et que la taille de la zone de séjour permet de déterminer si la personne (13) est debout ou couchée dans l'espace (1), l'analyse ayant pour objet de définir quel récepteur (4) par rapport à quel émetteur (3), par rapport au cas d'un espace (1) vide, ne reçoit aucun des signaux de détection émis par l'émetteur (3) et que la zone de séjour de la personne (13) ou d'un objet (14, 15) est déterminée à partir de la superposition géométrique des directions des rayonnements à partir desquelles aucun signal de détection n'est reçu.

2. Procédé selon la revendication 1, au cours duquel une mesure géométrique automatique de l'espace (1) est effectuée lors de la mise en service du système de capteurs.

3. Procédé selon la revendication 2, dans lequel les éléments porteurs (2a, 2b, 2c, 2d, 5), lors de la mise en service du système de capteurs, fournissent des informations sur leur type, le type d'élément porteur des éléments porteurs directement voisins (2a, 2b, 2c, 2d, 5) et au moins une partie des éléments porteurs (2c, 5) ainsi que sa longueur à l'unité de commande et d'analyse (10) centrale, lesquelles informations servent à réaliser la mesure géométrique de l'espace (1).

4. Procédé selon l'une des revendications 1 à 3, selon lequel les éléments porteurs (2a, 2b, 2c, 2d, 5), lors de la mise en service du système de capteurs, communiquent leur type à leurs éléments porteurs directement voisins (2a, 2b, 2c, 2d, 5), de préférence par transmission de leur identifiant.
